# EUROPÄISCHE PATENTSCHRIFT

(11) **EP 3 374 974 B1**
(45) Veröffentlichungstag und Bekanntmachung des Hinweises auf die Patenterteilung: **30.09.2020**
(21) Anmeldenummer: 16809046.2
(22) Anmeldetag: 09.12.2016
(51) Int. Cl.: G07C 9/00, B60R 25/24

(54) **FAHRZEUGSCHLÜSSEL FÜR PASSIVE ZUGANGSSYSTEME UND ZUGEHÖRIGES VERFAHREN**
VEHICLE KEY FOR PASSIVE ENTRY SYSTEMS AND METHOD THEREOF
CLÉ DE VÉHICULE POUR SYSTÈME D'ACCÈS PASSIF ET PROCÉDÉ CORRESPONDANT

(30) Priorität: 26.01.2016 DE 102016101371
(43) Veröffentlichungstag der Anmeldung: 19.09.2018
(73) Patentinhaber: Huf Hülsbeck & Fürst GmbH & Co. KG, 42551 Velbert (DE)
(72) Erfinder: ZILLER, Boris, 40885 Ratingen (DE); SKALETZ, Thomas, 40668 Meerbusch (DE)
(74) Vertreter: Zenz Patentanwälte Partnerschaft mbB
(86) Internationale Anmeldenummer: PCT/EP2016/080419
(87) Internationale Veröffentlichungsnummer: WO 2017/129302

(56) Entgegenhaltungen:
- DE-A1-102011 001 226
- US-A1- 2005 003 781
- US-A1- 2010 141 389
- US-B2- 7 602 274

## Beschreibung

Die Erfindung betrifft einen Funkschlüssel für ein Zugangssystem eines Fahrzeuges. Insbesondere betrifft die Erfindung einen Funkschlüssel (auch als ID-Geber bezeichnet) für sogenannte passive Zugangssysteme wie Keyless-Entry-Systeme.

Im Stand der Technik sind verschiedene Fahrzeugschlüssel für passive Zugangssysteme bekannt. Beispielsweise wird in dem Dokument US 7,602,274 B2, welche den Oberbegriff des Anspruchs 1 offenbart, ein Fahrzeugschlüssel von der Gattung des erfinderischen Fahrzeugschlüssels beschrieben. Der Fahrzeugschlüssel weist eine Spulenanordnung auf, die als sogenannte 3D-Spulenanordnung für einen Signalempfang im niederfrequenten (LF) Frequenzbereich ausgebildet ist. Drei Antennenspulen sind in unterschiedlichen Raumrichtungen orientiert, um eine niederfrequente Signalübermittlung (z.B. bei 125 kHz) von Seiten des Fahrzeuges in jeder Lage des Fahrzeugschlüssels empfangen zu können.

Eine solche 3D-Spulenanordnung ist mit einer zugehörigen Empfangsschaltung gekoppelt. Der Schlüssel weist außerdem eine Steuerschaltung auf, die wiederum mit der Empfangsschaltung gekoppelt ist. Die niederfrequente Signalübermittlung vom Fahrzeug an den Fahrzeugschlüssel wird verwendet, um den Fahrzeugschlüssel, insbesondere dessen Steuerschaltung, aus einem Ruhezustand aufzuwecken und eine nachfolgende Kommunikation im Hochfrequenzbereich zu initiieren. Dazu weist der Fahrzeugschlüssel neben den LF-Antennen außerdem wenigstens eine für die Hochfrequenzkommunikation ausgebildete Hochfrequenzantenne und eine zugehörige Übermittlungsschaltung auf.

Da die Energieressourcen des mobilen Funkschlüssels geschont werden sollen, ist eine zu häufige Aktivierung des Funkschlüssels zu vermeiden. Daher wird die zentrale Steuerschaltung des Funkschlüssels, welche einen Mikrocontroller und zugeordnete Mittel zur Ausführung eines Programmcodes enthält, nur dann aufgeweckt, wenn die Empfangsschaltung ein passendes Signal über die 3D-Spulenanordnung im niederfrequenten Bereich empfängt.

Am Markt sind Produkte verfügbar, welche mehrere der genannten Komponenten zu Baugruppen zusammenfassen und mehr oder weniger integrieren. Beispielsweise sind Produkte des Unternehmens Texas Instrument bekannt, welche entsprechende Spulenanordnungen mit Empfangsschaltungen integrieren (TI Car access product family).

Die Schlüssel der genannten Art sind insbesondere für sogenannte pollende, also von Fahrzeugseite aus die Umgebung regelmäßig über LF-Signale abfragende Systeme vorgesehen.

Die bekannten Schlüssel der genannten Art führen eine Decodierung des niederfrequenten Datenstroms der über die 3D-Spulenanordnung empfangen wird, in der integrierten Empfangsschaltung aus. Da diese Empfangsschaltung jedoch nicht auf die konkrete Gestaltung des Schlüssels angepasst ist, sondern universell gestaltet wird und zum Einsatz in vielen Schlüsselfamilien kommt, ist die Decodierungsleistung je nach Einbausituation und Qualität der integrierten Schaltung unzureichend.

Aufgabe der Erfindung ist es, einen verbesserten Fahrzeugschlüssel mit einer integrierten Empfangsschaltung bereitzustellen.

Diese Aufgabe wird gelöst durch einen Schlüssel mit den Merkmalen des Patentanspruches 1 sowie ein Verfahren mit den Merkmalen des Patentanspruches 3.

Gemäß der Erfindung weist der Funkschlüssel eine integrierte Empfangsschaltung auf. Diese verfügt über Spulen für einen niederfrequenten (LF) Signalempfang, wobei wenigstens drei LF-Empfangsspulen mit unterschiedlichen Raumrichtungsorientierungen ausgebildet sind.

Mit der Empfangsschaltung ist eine zentrale Steuerschaltung des Funkschlüssels gekoppelt. Diese zentrale Steuerschaltung verfügt über einen Mikrocontroller, wobei die Steuerschaltung mit dem Mikrocontroller verschiedene Betriebszustände einnehmen kann. Der Mikrocontroller kann in einen Ruhezustand oder in einem aufgeweckten Betriebszustand versetzt werden.

Gemäß der Erfindung erfolgt über die Empfangsschaltung der 3D-Spulenanordnung nach Empfang eines LF-Signals zunächst ein Wecken der zentralen Steuerschaltung. Der Vorgang des Empfangs eines solchen Signals und das nachfolgende Wecken sind bekannt und die im Markt verfügbaren Empfangsschaltungen erzeugen in Abhängigkeit von einem empfangenen Signal bei einer Trägerfrequenz zwischen 115kHz und 150kHz entsprechende Signale an nachgeordnete Schaltungen, wobei das Horchen auf ein Wake-up Signal durch die Empfangsschaltung nur einen sehr geringen Energiebedarf erfordert. Es ist vorgesehen, dass die Empfangsschaltung zum Wecken des Mikrocontrollers und der Steuerschaltung aus dem energiereduzierten Ruhezustand ausgebildet ist, wenn über die LF-Empfangsspulen ein Signal empfangen wird.

Gemäß der Erfindung wird von dem Zeitpunkt an, zu dem die Steuerschaltung und der Mikrocontroller aus einem Ruhemodus geweckt sind, die Empfangsschaltung derart angesteuert, dass die undecodierten, also empfangenen niederfrequenten Roh-Signaldaten von der Empfangsschaltung zum Mikrocontroller zu leiten. Die Daten werden im Mikrocontroller unter Ablaufsteuerung eines Programmcodes decodiert.

Die Empfangsschaltung ist daher für den Empfang der Signale eingesetzt, nimmt eine Decodierung der Signale aber nur so lange vor, bis die Steuerschaltung mit dem Mikrocontroller geweckt wurde. Danach werden die Signale ohne Decodierung von den Antennen durch die Empfangsschaltung zum Mikrocontroller durchgeleitet. Die Decodierung im Mikrocontroller erfolgt unter Programmsteuerung, welche auf den jeweiligen Schlüssel und dessen Bauform anpassbar ist. Insbesondere können zur Decodierung der Binärdaten des Datenstromes angepasste Toleranzen verwendet werden, so dass die Performance gegenüber einer Decodierung in der Empfangsschaltung verbessert wird.

Regelmäßig verfügt der zur Empfangsschaltung externe Mikrocontroller außerdem über eine verbesserte Verarbeitungsgenauigkeit als der Hardwaredecoder in der integrierten Empfangsschaltung. Wesentlicher ist aber, dass eine individuelle Anpassung auf die konkreten Einbaubedingungen und Betriebsbedingungen durch Eingriff in die Ablaufsteuerung der Software bewirkt werden kann.

Die Erfindung nutzt entsprechend einen Wechsel der Decodierungsverantwortlichkeit zwischen den internen Komponenten des Funkschlüssels und in Abhängigkeit vom Betriebszustand des Mikrocontrollers. Ist dieser Mikrocontroller geweckt, übernimmt er die Decodierung der niederfrequenten Daten. Ist hingegen der Mikrocontroller in einem energiereduzierten Betriebszustand, wird bis zum Wecken des Mikrocontrollers der Empfang und die für das Wecken erforderliche Decodierung der LF-Daten in der Empfangsschaltung ausgeführt.

Für die technische Realisierung kann regelmäßig auf die vorhandenen Funktionen der verfügbaren Empfangsschaltung zurückgegriffen werden, die einen Zugriff auf die Rohdaten des Signalempfangs erlauben. Die gesamte Decodierung kann als Programmablauf im Mikrocontroller implementiert werden, wobei dann flexibel das Decodierungsverhalten des Schlüssels ohne Eingriff in die vorgefertigten Empfangsschaltungen verbessert werden kann. Der Schlüssel ist nur dann noch von den Decodierqualitäten der implementierten Empfangsschaltung angewiesen, solange der Mikrocontroller und die zentrale Steuerschaltung sich im energiereduzierten Modus befinden.

Die Erfindung wird nun anhand der beiliegenden Zeichnung näher erläutert.
Figur 1 zeigt schematisch ein System, bestehend aus fahrzeugseitiger Kommunikationseinheit und mobilem Fahrzeugschlüssel;
Figur 2 zeigt ein Ablaufdiagramm eines Weckvorgangs eines Fahrzeugschlüssels Verfahrens gemäß dem Stand der Technik;
Figur 3 zeigt ein Ablaufdiagramm eines Weckvorgangs eines Fahrzeugschlüssels gemäß der Erfindung.

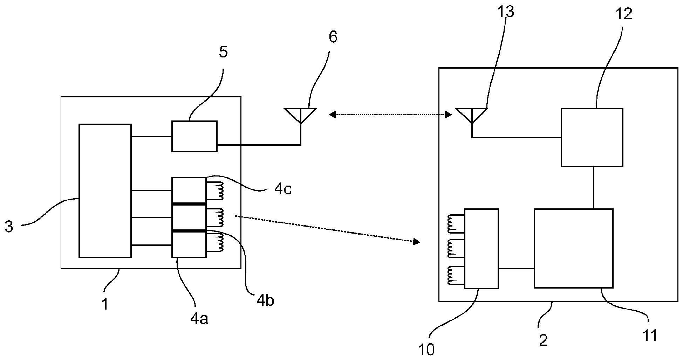

In Figur 1 ist in einer schematischen Ansicht eine fahrzeugseitige Kommunikationseinrichtung 1 gezeigt.

Über eine drahtlose Kommunikationsverbindung wirkt ein Fahrzeugschlüssel 2 mit der Kommunikationseinheit 1 zusammen, um ein passives Zugangssystem zur Verfügung zu stellen. In der fahrzeugseitigen Kommunikationseinheit ist eine zentrale Steuereinrichtung 3 eingebaut. Mit der zentralen Steuereinrichtung 3 sind mehrere Sendespulen 4a, 4b, 4c für eine niederfrequente (LF) Kommunikation gekoppelt. Die niederfrequente Kommunikation findet in diesem Beispiel bei 125 kHz statt. Außerdem ist eine Kommunikationsschaltung 5 vorgesehen, die mit einer Hochfrequenzantenne 6 gekoppelt ist. Über die Kommunikationsschaltung 5 kann unter Ansteuerung der Antenne 6 eine Hochfrequenzkommunikation ausgeführt werden.

Auf der Seite des Fahrzeugschlüssels 2 ist ein LF-Kommunikationsbaustein 10 angeordnet, welcher eine Empfangsschaltung und mit der Empfangsschaltung gekoppelte Spulen für den Empfang niederfrequenter Signale aufweist. Die Spulen sind dabei als sogenannte 3D-Spulenanordnung ausgebildet. Die einzelnen Spulen weisen dabei in verschiedene Raumrichtungen, um einen verbesserten Empfang der niederfrequenten Signale bei beliebiger Lage des Fahrzeugschlüssels 2 zu ermöglichen.

Mit der Empfangsschaltung 10 ist eine Steuereinrichtung 11 gekoppelt, welche einen energiereduzierten Stand-by-Zustand einnehmen kann. Der Stand-by-Zustand ist ein energiereduzierter Zustand, in dem der Energiebedarf der Einrichtung des Fahrzeugschlüssels 2 herabgesetzt ist, da die Steuereinrichtung inaktiv geschaltet ist. Über die Empfangsschaltung 10 ist es beim Empfang eines passenden Wake-Up-Signals möglich, die Steuerschaltung 11 durch eine Ansteuerung aufzuwecken.

Die Steuereinrichtung 11 weist einen Mikrocontroller und Speichermittel für ausführbare Programmcodes auf. Mit der Steuereinrichtung 11 ist außerdem eine Kommunikationsschaltung 12 gekoppelt, die wiederum mit einer Sende-Empfangsantenne 13 für Hochfrequenzkommunikation verbunden ist.

Im Betrieb sendet die Kommunikationseinheit des Fahrzeugs in kurzen Zeitabständen (z.B. 250ms) Wake-Up-Signale über die Antennen 4a, 4b, 4c aus, um Fahrzeugschlüssel im näheren Umfeld des Fahrzeuges aufzuwecken. Ein solches System mit wiederholter Abfrage der Umgebung wird als sogenanntes pollendes System bezeichnet. Gerät der Schlüssel 2 in dem näheren Umgebungsbereich des Fahrzeuges, erreicht die Feldstärke der LF-Wake-Up-Signale aus, um von der Empfangseinrichtung 10 detektiert zu werden. In der Empfangseinrichtung 10 wird das Wake-Up-Signal empfangen und in Abhängigkeit von dem Wake-Up-Signal wird die Steuereinrichtung 11 geweckt, also in einem betriebsfähigen Zustand versetzt.

Gemäß der Erfindung ist es vorgesehen, dass nach Aufwecken der Steuereinrichtung 11 durch diese Steuereinrichtung 11 eine Ansteuerung der Empfangseinrichtung 10 erfolgt.

Die Steuereinrichtung 11 fragt im geweckten Zustand die empfangenen niederfrequenten Rohdaten von der Empfangseinrichtung 10 ab und Verarbeitet diese in einem Mikrocontroller der Steuereinrichtung 11. So wird im Mikrocontroller eine Decodierung der Signale ausgeführt und in Abhängigkeit von den decodierten Signalen wird eine hochfrequente Kommunikation über die Kommunikationsschaltung 12 und die Antenne 13 mit den korrespondierenden Komponenten auf Fahrzeugseite, der Antenne 6 und der Kommunikationsschaltung 5, initiiert.

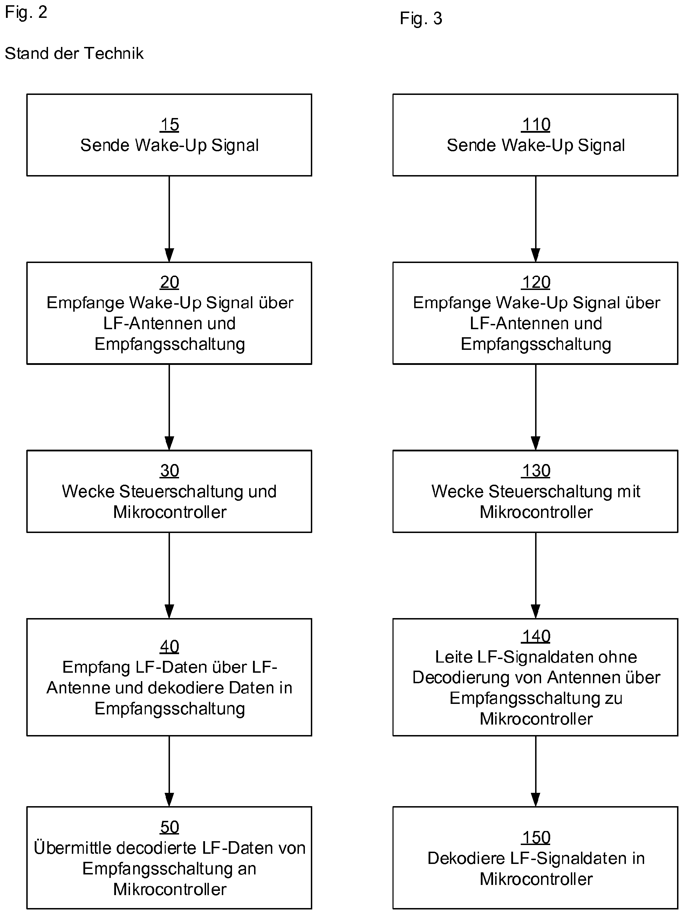

Figur 2 zeigt zur Verdeutlichung der Unterschiede des erfindungsgemäßen Verfahrens ein Verfahren zur LF-Decodierung gemäß dem Stand der Technik.

Gemäß dem Stand der Technik wird bei Schritt 15 vom Fahrzeug ein Wake-Up-Signal im niederfrequenten Signalbereich ausgesandt. Ein Fahrzeugschlüssel empfängt über eine 3D-Spulenanordnung das Wake-Up-Signal bei Schritt 20. Die Empfangsschaltung, die mit den Spulen für eine niederfrequente Kommunikation gekoppelt ist, trifft eine Auswahl der zu verwendenden LF-Empfangsantenne anhand der Signalstärke der einzelnen Antennen oder deren Antwortzeiten. Anschließend wird die Steuerschaltung mit dem Mikrocontroller bei Schritt 30 im Fahrzeugschlüssel geweckt. Über die vorausgewählte Antenne werden die niederfrequenten Daten empfangen und es erfolgt eine Decodierung der Daten in der Empfangsschaltung.

Im weiteren Verlauf der Authentifizierung des Fahrzeugschlüssels kann später eine RSSI-Bestimmung für die empfangene Signalstärke erfolgen. Diese wird dann wiederum anhand der durch die Empfangsschaltung vorausgewählten Antennenspule vorgenommen. Eine solche RSSI-Bestimmung dient dazu, die Lage des Fahrzeugschlüssels im Fahrzeug oder um das Fahrzeug herum genauer zu bestimmen, beispielsweise um die Berechtigung zur Ausführung einer Funktion zu validieren.

Figur 3 zeigt einen entsprechenden Zusammenhang gemäß der Erfindung. Gemäß der Erfindung wird die Reihenfolge der Verfahrensschritte geändert und die Mittel zur Ausführung der jeweiligen Verfahrensschritte werden abgewandelt.

In Schritt 110 wird von Fahrzeugseite ebenfalls ein Wake-Up-Signal ausgesandt, was in Schritt 120 über die LF-Spulenanordnung und die zugehörige Empfangsschaltung empfangen wird.

Anschließend wird die Steuerschaltung mit dem Mikrocontroller geweckt, wie Schritt 130 zeigt.

Nun übernimmt der Mikrocontroller der Steuerschaltung die Decodierung der LF-Daten. Über die Antennenanordnung werden die niederfrequenten Daten empfangen, eine Decodierung der Daten erfolgt bei Schritt 140, wobei die LF-Signale von der Empfangsschaltung ohne Decodierung an den Mikrocontroller übermittelt und dort dekodiert werden. Die Mittel zur LF-Dekodierung werden also durch den Mikrocontroller der Steuerschaltung gebildet.

Wesentlich ist also, dass gemäß der Erfindung zunächst ein Wecken des Mikrocontrollers in der Steuerschaltung erfolgt, danach wechselt die Kontrolle über die Decodierung von der Empfangsschaltung zum Mikrocontroller der Steuerschaltung.

Im weiteren erfolgt der Datenempfang der niederfrequenten Signale über die ausgewählte Antenne und die Empfangsschaltung mit Decodierung in der zur Empfangsschaltung externen Steuerschaltung, wie bei Schritt 150 gezeigt.

## Patentansprüche

1. Funkschlüssel (2) für ein Zugangssystem eines Kraftfahrzeuges, mit einer Empfangsschaltung (10) mit wenigstens drei LF-Empfangsspulen für einen niederfrequenten Signalempfang, wobei die LF-Empfangsspulen in verschiedene Raumrichtungen orientiert sind,
einer mit der Empfangsschaltung (10) gekoppelten zentralen Steuerschaltung (11) mit einem Mikrocontroller, wobei die Steuerschaltung mit dem Mikrocontroller verschiedene Betriebszustände einnehmen kann, von denen wenigstens ein Betriebszustand ein energiereduzierter Ruhezustand ist und ein Betriebszustand ein aktiver Betriebszustand ist, wobei die Empfangsschaltung (10) dazu ausgebildet ist, die Steuerschaltung (11) aus dem energiereduzierten Ruhezustand zu wecken, wenn über die LF-Empfangsspulen ein Signal empfangen wird,
**dadurch gekennzeichnet, dass**
die Empfangsschaltung ausgebildet ist, eine Decodierung der Signale nur so lange vorzunehmen bis die zentrale Steuerschaltung (11) mit dem Mikrocontroller geweckt wurde und wobei
die zentrale Steuerschaltung (11) mit dem Mikrocontroller ausgebildet ist, um nach dem Wecken aus dem Ruhezustand die Empfangsschaltung zur Durchleitung des empfangenen und undecodierten Datenstromes anzusteuern, wobei der Mikrocontroller den undecodierten Datenstrom durch Abarbeitung eines Programms extern zu der Empfangsschaltung decodiert.

2. Funkschlüssel (2) nach Anspruch 1, wobei die Empfangsschaltung (10) mit der LF-Spulenanordnung als integrierter Baustein ausgebildet ist und wobei die Steuerschaltung (11) getrennt von dem integrierten Baustein ausgebildet ist.

3. Verfahren zum Betreiben eines Funkschlüssels (2) für ein Zugangssystem eines Kraftfahrzeuges, mit einer Anordnung aus wenigstens drei LF-Empfangsspulen für einen niederfrequenten Signalempfang, wobei die LF-Empfangsspulen in verschiedenen Raumrichtungen orientiert sind, aufweisend die Schritte:
Erfassen von empfangenen Signalen an den LF-Empfangsspulen mit Hilfe einer Empfangsschaltung,
Decodieren der Signale in der Empfangsschaltung nur so lange bis eine mit der Empfangsschaltung gekoppelte zentrale Steuerschaltung geweckt wurde,
Wecken einer mit der Empfangsschaltung gekoppelten zentralen Steuerschaltung, wenn an einer der LF-Empfangsspulen ein Signal empfangen wird,
wobei beim Wecken ein Mikrocontroller der Steuerschaltung aus einem energiereduzierten Ruhezustand in einen aktiven Betriebszustand gebracht wird, wobei die zentrale Steuerschaltung mit dem Mikrocontroller nach dem Wecken die Empfangsschaltung zum Durchleiten der empfangenen, undecodierten Signale von der Empfangsschaltung an den Mikrocontroller ansteuert,
Decodieren der Signale in dem Microcontroller, extern zu der Empfangsschaltung.

## Claims

1. A radio key (2) for an entry system for a motor vehicle, with a receiving circuit (10) having at least three LF receiver coils for receiving low frequency signals, wherein the LF receiver coils are trained in different spatial directions,
a central control circuit (11) with a microcontroller, which control circuit is coupled to the receiver circuit (10), wherein the control circuit is able to assume various operating states, of which at least one operating state is a reduced energy idle state and one operating state is an active operating state, wherein the receiver circuit (10) is designed to wake the control circuit (11) from the reduced energy idle state when a signal is received via the LF receiver coils,
**characterized in that**
the receiver circuit is designed to perform a decoding of the signals only until the central control circuit (11) with the microcontroller has been woken, and
the central control circuit (11) with the microcontroller is designed in such manner that after waking from the idle state it actuates the receiver circuit to forward the received data stream which is not decoded, wherein the microcontroller decodes the data stream which has not been decoded by executing a program externally to the receiver circuit.

2. The radio key (2) according to Claim 1, wherein the receiver circuit (10) is designed as an integrated module with the LF coil assembly, and wherein the control circuit (11) is designed separately from the integrated module.

3. A method for operating a radio key (2) for an entry system for a motor vehicle with an assembly of at least three LF receiver coils for receiving low-frequency signals, wherein the LF receiver coils in are trained in different spatial directions, having the steps:
collecting signals received at the LF receiver coils with the aid of a receiver circuit,
decoding the signals in the receiver circuit only until a central control circuit coupled to the receiver circuit has been woken,
waking a central control circuit which is coupled to the receiver circuit when a signal is received at one of the LF receiver coils,
wherein upon waking a microcontroller of the control circuit is switched from a reduced energy idle state to an active operating state, wherein after being woken the central control circuit with the microcontroller actuates the receiver circuit to forward the received signals which have not been decoded from the receiver circuit to the microcontroller,
decoding the signals in the microcontroller externally to the receiver circuit.

## Revendications

1. Clé à radiocommande (2) pour un système d'accès d'un véhicule automobile avec un circuit de réception (10) avec au moins trois bobines de réception BF pour une réception de signaux à basse fréquence, sachant que les bobines de réception BF sont orientées dans différentes directions dans l'espace,
un circuit de commande (11) central couplé au circuit de réception (10) avec un microcontrôleur, sachant que le circuit de commande avec le microcontrôleur peut adopter différents états de fonctionnement parmi lesquels au moins un état de fonctionnement est un état de repos à énergie réduite et un état de fonctionnement est un état de fonctionnement actif, sachant que le circuit de réception (10) est constitué à cet effet pour éveiller le circuit de commande (11) de l'état de repos à énergie réduite, lorsqu'un signal est reçu par les bobines de réception BF,
**caractérisé en ce que**
le circuit de réception est constitué, un décodage des signaux est pratiquer jusqu'à ce que le circuit de commande (11) central avec le microcontrôleur ait été éveillé et sachant que
le circuit de commande (11) central avec le microcontrôleur est constitué pour piloter après l'éveil de l'état de repos, le circuit de réception pour faire passer le flux de données reçu et non décodé, sachant que le microcontrôleur décode le flux de données non décodé par la prise en charge d'un programme extérieurement au circuit de réception.

2. Clé à radiocommande (2) selon la revendication 1, sachant que le circuit de réception (10) avec le système de bobines BF est constitué comme un module intégré et sachant que le circuit de commande (11) est constitué séparément du module intégré.

3. Procédé destiné à faire fonctionner une clé à radiocommande (2) pour un système d'accès d'un véhicule automobile, avec un système d'au moins trois bobines de réception BF pour une réception de signaux à basse fréquence, sachant que les bobines de réception BF sont orientées dans différentes directions dans l'espace, comportant les étapes suivantes :
saisie des signaux reçus sur les bobines de réception BF à l'aide d'un circuit de réception,
décodage des signaux dans le circuit de réception seulement jusqu'à ce qu'un circuit de commande central couplé avec le circuit de réception ait été éveillé,
éveil d'un circuit de commande central couplé au circuit de réception, si un signal est reçu sur une des bobines de réception BF,
sachant que lors de l'éveil, un microcontrôleur du circuit de commande est placé d'un état de repos à énergie réduite dans un état de fonctionnement actif, sachant que le circuit de commande central avec le microcontrôleur pilote après l'éveil le circuit de réception pour faire passer les signaux reçus, non décodés du circuit de réception au microcontrôleur,
décodage des signaux dans le microcontrôleur, extérieurement au circuit de réception.
